# EUROPEAN PATENT APPLICATION

(11) **EP 1 270 124 A1**
(43) Date of publication of application: **02.01.2003**
(21) Application number: 02013894.7
(22) Date of filing: 24.06.2002
(51) Int. Cl.: B23C 5/28

(54) **High-speed rotating tool with an insert of fluid-cooled hard material**

(30) Priority: 28.06.2001 IT MI20011365
(71) Applicant: Camozzi Holding S.P.A., I-25126 Brescia (IT)
(72) Inventor: Camozzi, Ettore, 25121 Brescia (IT)
(74) Representative: Faraggiana, Vittorio, Dr. Ing.

(57) **Abstract**

A rotating tool (10) with a body (11, 12) has an inner path (15, 16) for circulation of a cooling fluid. The tool is provided with a cutting edge (13) made of an insert of hard material (14). The path of the cooling fluid comprises at least one cavity (17) in the body/insert interface so that the fluid flowing along the path grazes at least part of the rear surface of the insert before coming out to the outside at an insert extremity.

## Description

The present invention relates to a high-speed chip-forming rotating tool.

In tools of the so-called HSM (High Speed Machining) type elimination of heat generated during operation becomes particularly critical. Tools have been proposed in the art in the body of which a circulation of cooling fluid is present. In the case of tools rotating at particularly high speeds, the centrifugal forces acting on the cooling fluid and hindering circulation of same as well as the strong heat generated by friction make refrigeration of the tool body in accordance with the known art no longer satisfactory in terms of maintenance of the tool to an acceptable operating temperature.

It is a general aim of the present invention to obviate the above mentioned drawbacks by providing a rotating cutting tool having a cooling-fluid circulation enabling maintenance of satisfactory operating temperatures even in case of high cutting speeds.

In view of the above aim, in accordance with the invention a rotating tool has been conceived which is provided with a body having an inner path for circulation of a cooling fluid and a cutting edge made up of a bit or insert of hard material, characterised in that the path comprises at least one cavity in the body/insert interface so that the fluid flowing along the path grazes at least part of the rear surface of the insert.

For better explaining the innovative principles of the present invention and the advantages it offers over the known art, a possible embodiment applying such principles with be described hereinafter by way of example, with the aid of the accompanying drawings. In the drawings:
- Fig. 1 is a diagrammatic perspective view of a tool in accordance with the invention;
- Fig. 2 is a partial view of the tool sectioned along line II-II in Fig. 1;
- Fig. 3 is an enlarged view of part of the working head of the tool shown in Fig. 1.

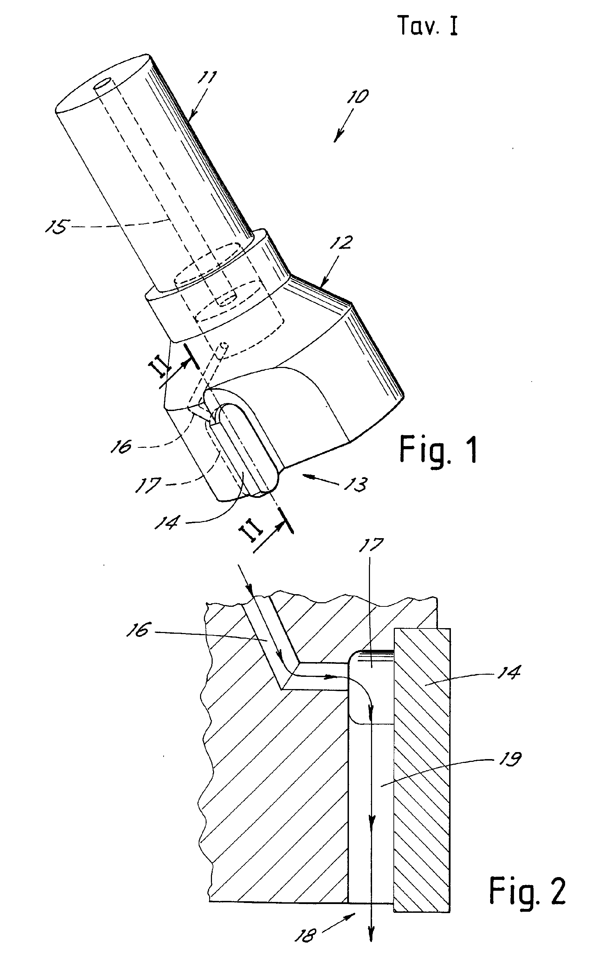

With reference to the drawings, shown in Fig. 1 is a rotating tool for carrying out chip-forming machining made in accordance with the invention and generally denoted at 10.

The tool comprises a body or shank 11, 12 provided with a cutting edge 13 having a housing to which an insert 14 of hard material is fastened (by known means). The tool is provided with an inner path 15, 16 for circulation of a suitable cooling fluid.

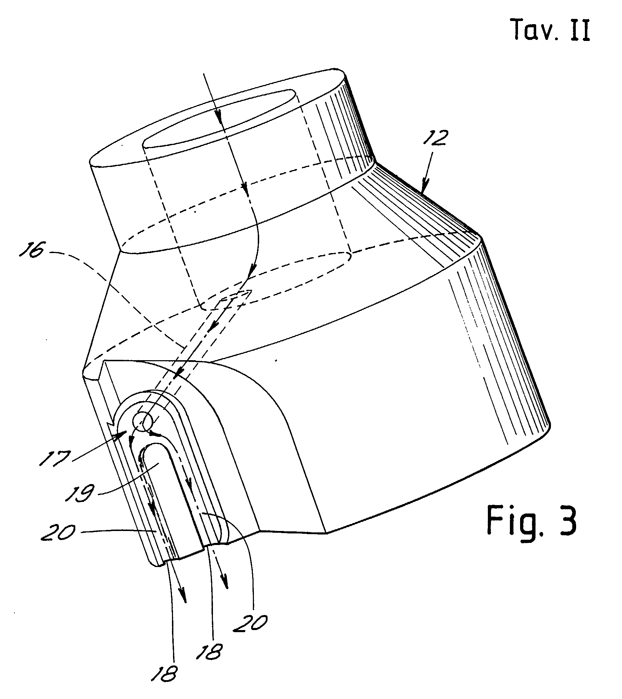

As clearly shown in Figs. 2 and 3, the path 15, 16 comprises at least one cavity 17 in the tool body, said cavity being disposed at the interface between the body 12 and the insert 14 in the housing. Thus the fluid is such fed that it directly grazes the rear surface of the insert. As shown in Fig. 3, the cavity is advantageously formed with a projection or pedestal 19 offering a central rear support for the insert. The pedestal 19 divides the cavity into two parts 20 longitudinally of the insert, so as to define two parallel fluid flows grazing the insert surfaces on the two sides of the support.

Entry of the cooling fluid into the cavity is obtained close to the innermost extremity (i.e. the higher extremity in the figures) of the insert where the cavity has not yet been divided by the pedestal. Exit of the fluid from the cavity on the contrary takes place at the opposite extremity, so that the fluid grazes the insert along the whole length thereof.

The fluid exit is direct and the fluid flows into two apertures 18 that are a direct extension of the cavity itself and the exit direction is parallel to the insert extension. Thus the fluid carries out a jet-lubrication of the cutting region.

It has been found advantageous for the tool body to be made of two parts: one portion 11 for fitting to the machine and with an axial duct 15 for the fluid, and one head portion 12 carrying the cutting edge, with an inclined duct 16 that from the axial duct reaches the chamber. This facilitates accomplishment of the ducts by drilling. Manufacture of the chamber may take place by milling.

At this point it is apparent that the intended purposes are achieved. It has been found that with the described circulation and in particular with a direct contact of the cooling fluid (fed to a conveniently high pressure) with the rear face of the insert, the operating temperature of the tool is greatly reduced and above all temperature excesses close to the cutting edge are avoided, without complicated paths of travel of the coolant within the tool being required. The cutting speed of the tool may also be very high (even higher than 2000 m/min), the operating temperatures being maintained to acceptable values.

Obviously, the above description of an embodiment applying the innovative principles of the present invention is reproduced by way of example only and therefore must not be considered as a limitation of the scope of the invention as herein claimed.

For example, the exact conformation of the tool, of the cutting edge and of the insert can be different from that shown depending on the specific practical requirements.

## Claims

1. A rotating tool (10) with a body (11, 12) having an inner path (15, 16) for circulation of a cooling fluid and a cutting edge (13) made up of an insert of hard material (14), **characterised in that** the path comprises at least one cavity (17) in the interface between the body and the insert so that the fluid flowing along the path grazes at least part of the rear surface of the insert.

2. A tool as claimed in claim 1, **characterised in that** a pedestal for central rear support of the insert is present in the cavity.

3. A tool as claimed in claim 2, **characterised in that** the pedestal divides the cavity into two parts longitudinally of the insert so as to have two parallel fluid flows grazing said insert surface.

4. A tool as claimed in claim 1, **characterised in that** entry of the cooling fluid into the cavity takes place close to a first extremity of the insert and exit of the fluid from the cavity and from the tool is close to a second extremity of the cavity opposite to the first one.

5. A tool as claimed in claim 4, **characterised in that** the fluid exit is in a direction parallel to the insert extension and constitutes a direct prolongation of the cavity.
